# EUROPÄISCHE PATENTSCHRIFT

(11) **EP 0 773 313 B1**
(45) Veröffentlichungstag und Bekanntmachung des Hinweises auf die Patenterteilung: **09.08.2000**
(21) Anmeldenummer: 96115792.2
(22) Anmeldetag: 02.10.1996
(51) Int. Cl.: D03D 1/00, B60R 22/00, D01F 6/84

(54) **Schwerentflammbare Sicherheitsgurte enthaltend phosphor-modifizierte Polyesterfasern**
Flame retardant safety belts containing phosphorous-modified polyester fibres
Ceintures de sécurité résistants à la flamme contenant des fibres de polyester modifiées par du phosphore

(30) Priorität: 11.10.1995 DE 19537700; 11.03.1996 DE 19609334
(43) Veröffentlichungstag der Anmeldung: 14.05.1997
(73) Patentinhaber: ARTEVA TECHNOLOGIES S.à.r.l., 8001 Zürich (CH)
(72) Erfinder: Bönigk, Burkhard, Dr., 86399 Königsbrunn (DE)
(74) Vertreter: Zounek, Nikolai, Dipl.-Ing.

(56) Entgegenhaltungen:
- EP-A- 0 661 393
- DATABASE WPI Section Ch, Week 9534 Derwent Publications Ltd., London, GB; Class A23, AN 95-261754 XP002026247 & JP 07 166 422 A (KURARAY CO LTD) , 27.Juni 1995
- DATABASE WPI Section Ch, Week 9135 Derwent Publications Ltd., London, GB; Class A23, AN 91-256753 XP002026246 & JP 03 167 312 A (TORAY IND INC) , 19.Juli 1991
- DATABASE WPI Section Ch, Week 9026 Derwent Publications Ltd., London, GB; Class A23, AN 90-196143 XP002026258 & JP 02 127 517 A (TORAY IND INC) , 16.Mai 1990

## Beschreibung

Die vorliegende Erfindung betrifft Sicherheitsgurte, welche durch den Einsatz phosphor-modifizierter Polyesterfasern schwerentflammbar sind.

Sicherheitsgurte sind in den letzten Jahren ein selbstverständlicher Bestandteil von modernen Fahrzeugen, insbesondere von Kraftfahrzeugen geworden. Infolge gestiegener Sicherheitsanforderungen hat sich die Anzahl der in einem Fahrzeug eingesetzten Sicherheitsgurte beträchtlich vergrößert.

Unter Fahrzeugen im Sinne dieser Beschreibung werden alle Arten von Land-, Wasser- und Luftfahrzeugen verstanden.

Sicherheitsgurte werden hauptsächlich aus Geweben hergestellt, die im wesentlichen aus hochfesten Polyesterfasern bestehen.

Bei der Entwicklung von sicherheitsrelevanten textilen Bauteilen für das Automobil steht die Festigkeit im Vordergrund. Bei einem Unfall verbleibt die relativ große textile Oberfläche des Sicherheitsgurtes im Inneren des Fahrzeuges. Im Brandfall bildet dies eine Gefahr für die Insassen, ähnlich wie dies von Vorhängen im Wohnbereich bekannt ist.

Das Thema schwerentflammbare Sicherheitsgurte blieb lange Zeit unbeachtet. In der JP-A-07-166,422 werden Phosphorverbindungen enthaltende Polyestergarne vorgeschlagen, die sich unter anderem auch zur Herstellung von Sicherheitsgurten eignen. Die vorbekannten Garne enthalten grobkörnige Partikel von 1 bis 100 µm, was im Vergleich von typischen Faserdurchmessern, wie etwa von 30 µm, als sehr groß bezeichnet werden muß. Diese Partikel können zu einem Sägeeffekt führen, besonders bei Konzentrationen von bis zu 5 Gew. %. Desweiteren weisen diese Fasern mit mehr als 30 % sehr hohe Höchstzugkraftdehnungen auf.

Aus der JP-A-91-167,312 sind schwerentflammbare Polyesterfasern zur Herstellung von Geweben bekannt, die sich ihrerseits zur Herstellung von Airbags eignen. Die Offenbarung in dieser Schrift beschreibt lediglich Airbags aus beschichteten Geweben. Eine Anregung, derartige Gewebe zur Herstellung von Sicherheitsgurten einzusetzen ist in der Schrift nicht zu finden.

Im Hinblick auf die steigenden Sicherheitsanforderungen in Fahrzeugen besteht ein Bedarf an schwerentflammbaren Sicherheitsgurten, insbesondere um das bei Unfällen bestehende Brandrisiko und die damit verbundene Gefährdung der Fahrzeuginsassen zu minimieren.

Es ist deshalb Aufgabe der vorliegenden Erfindung, Garne und Gewebe für Sicherheitsgurte zur Verfügung zu stellen, die die notwendigen sicherheitsrelevanten Eigenschaften bekannter Garne bzw. Gewebe aufweisen und darüber hinaus noch flammhemmende Eigenschaften aufweisen.

Es wurden nun überraschend gefunden, daß sich schwerentflammbare Sicherheitsgurte durch die Verwendung von schwerentflammbaren und phosphor-modifizierten Polyesterfilamenten herstellen lassen.

Die Erfindung betrifft Sicherheitsgurte enthaltend ein Gewebe, das hochfeste Filamentgarne aus phosphor-modifiziertem Copolyester, mit einem Garntiter von weniger als 2000 dtex, mit einem Einzelfasertiter von kleiner gleich 25 dtex sowie mit einer Höchstzugkraftdehnung von kleiner als 30 % enthält, wobei der phosphor-modifizierte Copolyester eine bifunktionelle Phosphorverbindung in einer Menge von 0,1 bis 5 Gew. %, vorzugsweise von 0,2 bis 0,8 Gew. %, bezogen auf die Menge an Phosphor, in der Polymerkette enthält.

Die erfindungsgemäßen Sicherheitsgurte können zu einem geringeren Anteil oder vollständig aus den oben definierten hochfesten und phosphor-modifizierten Filamentgarnen bestehen. So ist es beispielsweise möglich nur eines der die erfindungsgemäßen Sicherheitsgurte aufbauenden Fadensysteme ganz oder auch nur zum Teil aus diesen Garnen aufzubauen. Der Fachmann kann die im Einzelfall notwendige Menge an den oben definierten hochfesten und phosphor-modifizierten Filamentgarnen, beispielsweise sich an der gewünschten Festigkeit der Gewebe orientierend, anhand von Routineversuchen ermitteln

Durch den Einsatz der phosphor-modifizierten Polyesterfasern läßt sich die Schwerentflammbarkeit der daraus hergestellten Gewebe vergrößern. Unter einem schwerentflammbaren Gewebe im Sinne dieser Beschreibung ist ein Rohgewebe zu verstehen, das bei der Brennbarkeitsprüfung nach DIN 4102/B2 eine Gesamt-Brennzeit hat, die mindestens um den Faktor 5, vorzugsweise um den Faktor 10 kürzer ist als die eines vergleichbaren Rohgewebes an nicht-phosphormodifiziertem Polyester und bei dem nach DIN 54336 bei 3 und 15 Sekunden Beflammung und nach DIN 54333 bei 3 Sekunden Beflammung kein Nachbrennen auftritt.

Neben den oben hochfesten und phosphor-modifizierten Filamentgarnen kann ein Teil der die in den erfindungsgemäßen Sicherheitsgurten eingesetzten Garne aus nicht-phosphor-modifizierten und hochfesten Filamentgarnen bestehen.

Bevorzugt ist zumindest eine Richtung, z. B. die Schuß- oder die Kettrichtung, der Gewebe vollständig aus den oben definierten hochfesten und phosphor-modifizierten Filamentgarnen aufgebaut; besonders bevorzugt sind beide Richtungen aus derartigen Filamentgarnen aufgebaut.

Die erfindungsgemäßen Sicherheitsgurte können aus Geweben enthaltend zwei oder mehr Fadensysteme bestehen; vorzugsweise sind zwei Fadensysteme vorgesehen (Kett- und Schußfadenscharen).

Ganz besonders bevorzugt werden Gewebe eingesetzt, die aus mindestens zwei Fadensystemen bestehen, welche jeweils zu mindestens 90 % aus den oben definierten hochfesten und phosphor-modifizierten Filamentgarnen bestehen.

Besonders bevorzugt werden Sicherheitsgurte, wie oben definiert, deren hochfeste Filamentgarne eine feinheitsbezogene Höchstzugkraft von mehr als 60 cN/tex, vorzugsweise von mehr als 65 cN/tex, und eine Höchstzugkraftdehnung von 10 bis 25 % besitzen.

Die Messung der Höchstzugkraft und der Höchstzugkraftdehnung der zum Einsatz kommenden Polyestergarne erfolgt in Anlehnung an DIN 53 830, Teil 1.

Besonders bevorzugt werden Sicherheitsgurte, wie oben definiert, deren hochfeste Filamentgarne einen Heißluftschrumpf bei 200 °C von weniger als 20 % besitzen.

Die Messung des Thermoschrumpfes (Heißluftschrumpf) der zum Einsatz kommenden Polyestergarne erfolgt in Anlehnung an DIN 53 866, Teil 3 bei einer Temperatur von 200 °C an freihängenden Garnproben bei einer Behandlungszeit von 15 Minuten. Eingesetzt werden 10 m Strang bei einer Haspelspannung von 0,5 cN/tex.

Eine weitere besonders bevorzugte Ausführungsform betrifft Sicherheitsgurte, wie oben definiert, deren Gewebe neben hochfesten Filamentgarnen aus phosphor-modifiziertem Copolyester Monofilamente mit einem Durchmesser von kleiner gleich 0,5 mm enthält, wobei die Monofilamente phosphor-modifizierten Copolyester, der eine bifunktionelle Phosphorverbindung in einer Menge von 0,1 bis 5 Gew. %, vorzugsweise von 0,2 bis 0,8 Gew. %, bezogen auf die Menge an Phosphor, in der Polymerkette enthalten.

Die Monofilamente verleihen dem Sicherheitsgurt eine verbesserte hohe elastische Quersteifheit; dadurch wird ein Verdrehen des Sicherheitsgurtes verhindert.

In einer weiteren bevorzugten Ausführungsform des erfindungsgemäßen Sicherheitsgurtes werden Monofilamente eingesetzt, die eine feinheitsbezogene Höchstzugkraft von mehr als 35 cN/tex und eine Höchstzugkraftdehnung von mehr als 15 % besitzen und/oder die einen Heißluftschrumpf bei 180 °C von weniger als 20 % besitzen.

Ganz besonders bevorzugt werden Gewebe eingesetzt, die schlichtefreie hochfeste Filamentgarne aus phosphor-modifiziertem Copolyester enthalten.

Die erfindungsgemäßen unbeschichteten Gewebe können unterschiediche Bindungen aufweisen, vorzugsweise eine Köperbindung, insbesondere eine Köper-K 2/2-Bindung, oder eine Ripsbindung. Gewebe mit diesen Bindungen sind an sich bekannt.

Die erfindungsgemäßen Sicherheitsgurte enthalten vorzugsweise Gewebe mit einem Flächengewicht von weniger als 100 g pro laufendem Meter bei 50 mm Breite und einer Gewebedicke von weniger als 1,5 mm.

Ein besonders bevorzugtes Gewebe weist eine Höchstzugkraft von mehr als 1470 daN bei 50 mm Breite und eine Bezugsdehnung bei 1000 N von weniger als 20 % bei 50 mm Breite, beides gemessen nach DIN 53 857, Teil 1, auf.

Die erfindungsgemäß zum Einsatz gelangenden hochfesten Filamentgarne enthalten Polyesterfilamente, die aus einem phosphor-modifizierter Copolyester aufgebaut sind.

Bei dem Copolyester kann es sich um eine beliebiges verspinnbares Copolymeres mit wiederkehrenden Estergruppen handeln, solange dieses in der Polymerkette eine bifunktionelle Phosphorverbindung in der oben angegebenen Menge enthält.

Bevorzugt werden hochfeste Filamente aus phosphor-modifizierten Copolyestern eingesetzt, die die wiederkehrenden Struktureinheiten der Formel I enthalten

-O-OC-Ar¹-CO-O-R¹- (I),

und
welche in der Polymerkette Baugruppen der Formel II aufweisen 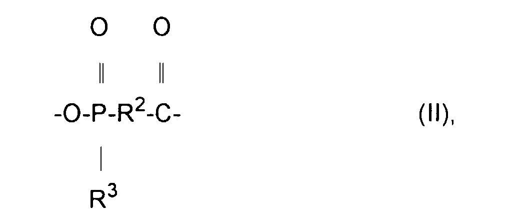
worin Ar¹ einen zweiwertigen aromatischen Rest darstellt,
R¹ ein zweiwertiger aliphatischer oder cycloaliphatischer Rest ist,
R² einen zweiwertigen aliphatischen, cycloaliphatischen, aromatischen oder araliphatischen Rest darstellt, und
R³ einen einwertigen aliphatischen, cycloaliphatischen, aromatischen oder araliphatischen Rest bedeutet.

Besonders bevorzugt verwendet werden modifizierte Polyester des oben gekennzeichneten Typs, worin Ar¹ Phenylen oder Naphthylen bedeutet, insbesondere 1,4-Phenylen oder 2,6-Naphthylen.

Ebenfalls besonders bevorzugt verwendet werden modifizierte Polyester des oben gekennzeichneten Typs, worin R¹ einen Rest der Formel -CₙH₂ₙ- darstellt, worin n eine ganze Zahl zwischen 2 und 6 ist, insbesondere Ethylen, oder einen von Cyclohexandimethanol abgeleiteten Rest darstellt.

Ebenfalls besonders bevorzugt verwendet werden modifizierte Polyester des oben gekennzeichneten Typs, worin R² einen Rest der Formel -CₘH₂ₘ-, worin m eine ganze Zahl zwischen 2 und 10 ist, oder einen cyclischen Alkandiylrest mit 4 bis 8, vorzugsweise mit 6 Kohlenstoffatomen bedeutet und daß R³ C₁-C₆Alkyl, Cyclohexyl, Phenyl, oder Benzyl bedeutet.

Bedeuten in den oben definierten Strukturformeln irgendwelche Reste zweiwertige aliphatische Reste, so ist darunter verzweigtes und insbesondere geradkettiges Alkylen zu verstehen, beispielsweise Alkylen mit zwei bis zwanzig, vorzugsweise mit zwei bis acht Kohlenstoffatomen. Beispiele für derartige Reste sind Ethan-1,2-diyl, Propan-1,3-diyl, Butan-1,4-diyl, Pentan-1,5-diyl, Hexan-1,6-diyl oder Octan-1,8-diyl.

Bedeuten in den oben definierten Strukturformeln irgendwelche Reste zweiwertige cycloaliphatische Reste, so sind darunter Gruppen zu verstehen, die carbocyclische Reste mit fünf bis acht, vorzugsweise sechs Ringkohlenstoffatomen enthalten. Beispiele für derartige Reste sind Cyclohexan-1,4-diyl oder die Gruppe -CH₂-C₆H₁₀-CH₂-.

Bedeuten in den oben definierten Strukturformeln irgendwelche Reste zweiwertige aromatische Reste, so handelt es sich dabei um heterocyclisch-aromatische Reste, die ein- oder mehrkernig sein können, oder insbesondere um ein- oder mehrkernige aromatische Kohlenwasserstoffreste. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie -O-, -S-,-CO- oder -CO-NH- Gruppen miteinander verbunden sein.

Die Valenzbindungen der zweiwertigen aromatischen Reste können sich in para- oder in vergleichbarer koaxialer oder paralleler Position zueinander befinden, oder auch in meta- oder in vergleichbarer gewinkelter Position zueinander.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphen-4,4'-diyl Bindungen. Ein Beispiel für parallel, entgegengesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylen.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Bedeuten irgendwelche Reste zweiwertige araliphatische Reste, so sind darunter Gruppen zu verstehen, die einen oder mehrere zweiwertige aromatische Reste enthalten, welche über eine oder beide Valenzen mit einem Alkylenrest kombiniert sind. Ein bevorzugtes Beispiel für einen derartigen Rest ist die Gruppe -C₆H₄-CH₂-.

Bedeuten irgendwelche Reste einwertige aliphatische Reste, so ist darunter verzweigtes und insbesondere geradkettiges Alkyl zu verstehen, beispielsweise Alkyl mit ein bis sechs Kohlenstoffatomen, insbesondere Methyl.

Bedeuten irgendwelche Reste einwertige cycloaliphatische Reste, so sind darunter Gruppen zu verstehen, die carbocyclische Reste mit fünf bis acht, vorzugsweise sechs Ringkohlenstoffatomen enthalten. Ein Beispiel für einen derartigen Rest ist Cyclohexyl.

Bedeuten irgendwelche Reste einwertige aromatische Reste, so handelt es sich dabei um heterocyclisch-aromatische Reste, die ein- oder mehrkernig sein können, oder insbesondere um ein- oder mehrkernige aromatische Kohlenwasserstoffreste.

Im Falle von heterocyclisch-aromatischen Resten weisen diese insbesondere ein oder zwei Sauerstoff-, Stickstoff- oder Schwefelatome im aromatischen Kern auf. Ein Beispiel für einen derartigen Rest ist Phenyl oder Naphthyl.

Bedeuten irgendwelche Reste einwertige araliphatische Reste, so sind darunter Gruppen zu verstehen, die einen oder mehrere aromatische Reste enthalten, welche über eine Valenz mit einem Alkylenrest kombiniert sind. Ein bevorzugtes Beispiel für einen derartigen Rest ist die Benzylgruppe.

Alle diese aliphatischen, cycloaliphatischen, aromatischen oder araliphatischen Reste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Bedeuten irgendwelche Reste Halogen, so handelt es sich dabei beispielsweise um Fluor, Brom oder insbesondere um Chlor.

Besonders bevorzugt handelt es sich bei den erfindungsgemäß zum Einsatz kommenden Filamentgarnen und/oder Monofilamenten um Filamentgarne bzw. Monofilamente aus phospor-modifiziertem Polyethylenterephthalat.

Die zum Einsatz kommenden hochfesten Filamentgarne oder Monofilamente können aus modifizierten Polyestern aufgebaut sein, die üblicherweise eine intrinsische Viskosität von mindestens 0,5 dl/g, vorzugsweise 0,6 bis 1,5 dl/g aufweisen. Die Messung der intrinsischen Viskosität erfolgt in einer Lösung des Polyesters in Dichloressigsäure bei 25 °C.

Die eingesetzten hochfesten Filamentgarne weisen Garntiter von weniger als 2000 dtex, vorzugsweise von 280 bis 1700 dtex auf. Als Kettfaden eingesetzte Filamentgarne weisen dabei üblicherweise höhere Garntiter auf, beispielsweise zwischen 1100 und 1700 dtex, als Filamentgarne, die als Schußfäden eingesetzt werden, beispielsweise zwischen 550 und 1100 dtex.

Der Einzelfasertiter der Filamente in den eingesetzten hochfesten Filamentgarnen bewegt sich im Bereich von kleiner gleich 25 dtex, vorzugsweise 4 bis 20 dtex.

Die Querschnitte der Filamente in den eingesetzten hochfesten Filamentgarnen oder Monofilamenten können beliebig sein; beispielsweise ellipsenförmig, bi- oder multilobal, bändchenförmig oder vorzugsweise rund.

Die eingesetzten hochfesten Filamentgarne aus phosphor-modifizierten Copolyestern sind an sich bekannt, beispielsweise aus der EP-A-661,393, deren Beschreibung auch Inhalt der vorliegenden Beschreibung ist.

Die Herstellung der phosphor-modifizierten Copolyester erfolgt nach an sich bekannten Verfahren durch Polykondensation der entsprechenden bifunktionellen Monomerkomponenten, wie z.B. in der oben erwähnten EP-A-661,393 beschrieben.

Die Herstellung der hochfesten Filamente kann nach an sich bekannten Schmelzspinnverfahren erfolgen, wie z. B. in der oben erwähnten EP-A-661,393 beschrieben.

Die die erfindungsgemäßen Sicherheitsgurte aufbauenden Gewebe können durch an sich bekannte Webtechniken hergestellt werden.

Die Fadendichten mindestens eines der Fadensysteme der erfindungsgemäß eingesetzten Gewebe betragen üblicherweise wenigstens 30 Fäden pro Zentimeter, vorzugsweise wenigstens 35 Fäden pro Zentimeter, und besonders bevorzugt wenigstens 40 Fäden pro Zentimeter.

Die erfindungsgemäßen Sicherheitsgurte können spinngefärbte Polyesterfasern enthalten und/oder nach der Gewebeherstellung einem an sich bekannten Färbeverfahren unterworfen werden. Es lassen sich auch unterschiedlich gefärbte Polyesterfasern einsetzen.

Werden spinngefärbte oder mit Mattierungsmittel, beispielsweise mit Titandioxid, versehene Polyesterfasern eingesetzt, so enthalten diese vorzugsweise Partikel mit einem mittleren Durchmesser von kleiner als 1 µm, besonders bevorzugt von kleiner als 0,5 µm.

Beispiele für spinngefärbte Polyesterfasern sind rußgefärbte Typen.

Die Erfindung betrifft auch die Verwendung der oben definierten phosphor-modifizierten Fasern zur Herstellung von Sicherheitsgurten.

Die erfindungsgemäßen Sicherheitsgurte kommen beispielsweise in Automobilen aber auch in Flugzeugen oder sonstigen Luftfahrzeugen sowie in Booten, insbesondere in Motorbooten im Freizeitbereich zum Einsatz. Die Erfindung betrifft auch die Verwendung der Sicherheitsgurte in diesen Fahrzeugen.

## Patentansprüche

1. Sicherheitsgurt enthaltend ein Gewebe, das hochfeste Filamentgarne aus phosphor-modifiziertem Copolyester, mit einem Garntiter von weniger als 2000 dtex, mit einem Einzelfasertiter von kleiner gleich 25 dtex sowie mit einer Höchstzugkraftdehnung von kleiner als 30 % enthält, wobei der phosphor-modifizierte Copolyester eine bifunktionelle Phosphorverbindung in einer Menge von 0,1 bis 5 Gew. %, bezogen auf die Menge an Phosphor, in der Polymerkette enthält.

2. Sicherheitsgurt nach Anspruch 1, dadurch gekennzeichnet, daß der phosphor-modifizierte Copolyester eine bifunktionelle Phosphorverbindung in einer Menge von 0,2 bis 0,8 Gew. %, bezogen auf die Menge an Phosphor, in der Polymerkette enthält.

3. Sicherheitsgurt nach Anspruch 1, dadurch gekennzeichnet, daß dessen Gewebe aus mindestens zwei Fadensystemen besteht, welche jeweils zu mindestens 90 Gew % aus hochfesten Filamentgarnen aus phosphor-modifiziertem Copolyester bestehen.

4. Sicherheitsgurt nach Anspruch 1, dadurch gekennzeichnet, daß das hochfeste Filamentgarn eine feinheitsbezogene Höchstzugkraft von mehr als 60 cN/tex, vorzugsweise mehr als 65 cN/tex, und eine Höchstzugkraftdehnung von 10 bis 25 % besitzt.

5. Sicherheitsgurt nach Anspruch 1, dadurch gekennzeichnet, daß das hochfeste Filamentgarn einen Heißluftschrumpf bei 200 °C von weniger als 20 % besitzt.

6. Sicherheitsgurt nach Anspruch 1, dadurch gekennzeichnet, daß das Gewebe neben hochfesten Filamentgarnen aus phosphor-modifizierten Copolyester Monofilamente mit einem Durchmesser von kleiner gleich 0,5 mm enthält, wobei die Monofilamente phosphor-modifizierten Copolyester, der eine bifunktionelle Phosphorverbindung in einer Menge von 0,1 bis 5 Gew.%, vorzugsweise von 0,2 bis 0,8 Gew.%, bezogen auf die Menge an Phosphor, in der Polymerkette enthalten.

7. Sicherheitsgurt nach Anspruch 6, dadurch gekennzeichnet, daß die Monofilamente eine feinheitsbezogene Höchstzugkraft von mehr als 35 cN/tex und eine Höchstzugkraftdehnung von mehr als 15 % besitzen.

8. Sicherheitsgurt nach Anspruch 6, dadurch gekennzeichnet, daß das Monofilament einen Heißluftschrumpf bei 180 °C von weniger als 20 % besitzt.

9. Sicherheitsgurt nach Anspruch 1, dadurch gekennzeichnet, daß das hochfeste Filamentgarn schlichtefrei ist.

10. Sicherheitsgurt nach Anspruch 1, dadurch gekennzeichnet, daß dessen Gewebe eine Köperbindung, insbesondere eine Köper-K 2/2-Bindung, oder eine Ripsbindung aufweist.

11. Sicherheitsgurt nach Anspruch 1, dadurch gekennzeichnet, daß dessen Gewebe ein Flächengewicht von weniger als 100 g pro laufendem Meter bei 50 mm Breite und eine Gewebedicke von weniger als 1,5 mm besitzt.

12. Sicherheitsgurt nach Anspruch 1, dadurch gekennzeichnet, daß dessen Gewebe eine Höchstzugkraft von mehr als 1470 daN bei 50 mm Breite und eine Bezugsdehnung bei 1000 N von weniger als 20 % bei 50 mm Breite aufweist.

13. Sicherheitsgurt nach Anspruch 1, dadurch gekennzeichnet, daß der phosphor-modifizierte Copolyester die wiederkehrenden Struktureinheiten der Formel I enthält
-O-OC-Ar¹-CO-O-R¹- (I),
und
der in der Polymerkette Baugruppen der Formel II aufweist 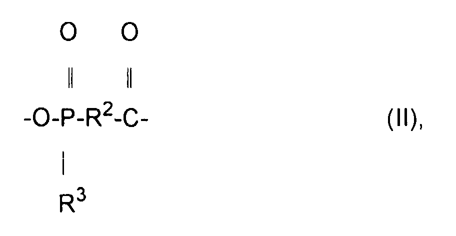 worin
Ar¹ einen zweiwertigen ein- oder mehrkernigen aromatischen Rest darstellt,
R¹ ein zweiwertiger aliphatischer oder cycloaliphatischer Rest ist,
R² einen zweiwertigen aliphatischen, cycloaliphatischen, aromatischen oder araliphatischen Rest darstellt, und
R³ einen einwertigen aliphatischen, cycloaliphatischen, aromatischen oder araliphatischen Rest bedeutet.

14. Sicherheitsgurt nach Anspruch 13, dadurch gekennzeichnet, daß Ar¹ Phenylen oder Naphthylen bedeutet, insbesondere 1,4-Phenylen oder 2,6-Naphthylen.

15. Sicherheitsgurt nach Anspruch 13, dadurch gekennzeichnet, daß R¹ einen Rest der Formel -CₙH₂ₙ-, worin n eine ganze Zahl zwischen 2 und 6 ist, insbesondere Ethylen, oder einen von Cyclohexandimethanol abgeleiteten Rest darstellt.

16. Sicherheitsgurt nach Anspruch 13, dadurch gekennzeichnet, daß R² einen Rest der Formel -CₘH₂ₘ-, worin m eine ganze Zahl zwischen 2 und 10 ist, oder einen cyclischen Alkandiylrest mit 4 bis 8, vorzugsweise mit 6 Kohlenstoffatomen bedeutet und daß R³ C₁-C₆Alkyl, Cyclohexyl, Phenyl, oder Benzyl bedeutet.

17. Verwendung von hochfesten Filamentgarnen aus phosphor-modifiziertem Copolyester, mit einem Garntiter von weniger als 2000 dtex, mit einem Einzelfasertiter von kleiner gleich 25 dtex sowie mit einer Höchstzugkraftdehnung von kleiner als 30 % zur Herstellung von Sicherheitsgurten, wobei der phosphor-modifizierte Copolyester eine bifunktionelle Phosphorverbindung in einer Menge von 0,1 bis 5 Gew.%, bezogen auf die Menge an Phosphor, in der Polymerkette enthält.

18. Verwendung der Sicherheitsgurte nach Anspruch 1 in Automobilen, Flugzeugen oder Motorbooten.

## Claims

1. A safety belt comprising a fabric which comprises high-tenacity filament yarns made of phosphorus-modified copolyester having a yarn linear density of less than 2000 dtex, having a single-fiber linear density of less than or equal to 25 dtex and having a breaking elongation of less than 30%, the phosphorus-modified copolyester containing a bifunctional phosphorus compound in an amount of 0.1 to 5% by weight, based on the amount of phosphorus, in the polymer chain.

2. The safety belt as claimed in claim 1, wherein the phosphorus-modified copolyester contains a bifunctional phosphorus compound in an amount of 0.2 to 0.8% by weight, based on the amount of phosphorus, in the polymer chain.

3. The safety belt as claimed in claim 1, wherein its fabric consists of at least two thread systems, each of which comprises at least 90% by weight of high-tenacity filament yarns made of phosphorus-modified copolyester.

4. The safety belt as claimed in claim 1, wherein the high-tenacity filament yarn has a tenacity of more than 60 cN/tex, preferably more than 65 cN/tex, and a breaking elongation of 10 to 25%.

5. The safety belt as claimed in claim 1, wherein the high-tenacity filament yarn has a hot-air shrinkage at 200°C of less than 20%.

6. The safety belt as claimed in claim 1, wherein, in addition to high-tenacity filament yarns made of phosphorus-modified copolyester, the fabric comprises monofilaments having a diameter of less than or equal to 0.5 mm, the monofilaments comprising phosphorus-modified copolyester which contains a bifunctional phosphorus compound in an amount of 0.1 to 5% by weight, preferably 0.2 to 0.8% by weight, based on the amount of phosphorus, in the polymer chain.

7. The safety belt as claimed in claim 6, wherein the monofilaments have a tenacity of more than 35 cN/tex and a breaking elongation of more than 15%.

8. The safety belt as claimed in claim 6, wherein the monofilament has a hot-air shrinkage at 180°C of less than 20%,

9. The safety belt as claimed in claim 1, wherein the high-tenacity filament yarn is size-free.

10. The safety belt as claimed in claim 1, wherein its fabric has a twill weave, in particular a K 2/2 twill weave, or a rep weave.

11. The safety belt as claimed in claim 1, wherein its fabric has a mass per unit area of less than 100 g per running meter at 50 mm width and a fabric thickness of less than 1.5 mm.

12. The safety belt as claimed in claim 1, wherein its fabric has a breaking force of more than 1470 daN at 50 mm width and a 1000 N EASL of less than 20% at 50 mm width.

13. The safety belt as claimed in claim 1, wherein the phosphorus-modified copolyester contains the repeating structural units of the formula I
-O-OC-Ar¹-CO-O-R¹- (I),
and
which has in the polymer chain components of the formula II 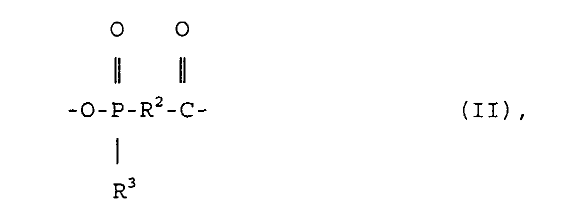
in which Ar¹ is a divalent mononuclear or polynuclear aromatic radical,
R¹ is a divalent aliphatic or cycloaliphatic radical,
R² is a divalent aliphatic, cycloaliphatic, aromatic or araliphatic radical, and
R³ is a monovalent aliphatic, cycloaliphatic, aromatic or araliphatic radical.

14. The safety belt as claimed in claim 13, wherein Ar¹ is phenylene or naphthylene, in particular 1,4-phenylene or 2,6-naphthylene.

15. The safety belt as claimed in claim 13, wherein R¹ is a radical of the formula -CₙH₂ₙ-, in which n is an integer between 2 and 6, in particular ethylene, or is a radical derived from cyclohexanedimethanol.

16. The safety belt as claimed in claim 13, wherein R² is a radical of the formula -CₘH₂ₘ-, in which m is an integer between 2 and 10, or is a cyclic alkanediyl radical having 4 to 8, preferably 6, carbon atoms, and R³ is C₁-C₆alkyl, cyclohexyl, phenyl, or benzyl.

17. Use of high-tenacity filament yarns made of phosphorus-modified copolyester having a yarn linear density of less than 2000 dtex, having a single-fiber linear density of less than or equal to 25 dtex and having a breaking elongation of less than 30% for manufacturing safety belts, the phosphorus-modified copolyester containing a bifunctional phosphorus compound in an amount of 0.1 to 5% by weight, based on the amount of phosphorus, in the polymer chain.

18. Use of the safety belts as claimed in claim 1 in automobiles, airplanes or motorboats.

## Revendications

1. Ceinture de sécurité comprenant un tissage qui comprend des fils continus de haute résistance, constitués d'un co-polyester modifié par du phosphore, avec un titre de fil inférieur à 2000 dtex, un titre de fibre individuelle inférieur à 25 dtex, et une dilatation sous contrainte maximale de traction inférieure à 30 %, le co-polyester modifié par du phosphore comprenant, au sein de la chaîne polymère, un radical phosphoré bifonctionnel dans une proportion allant de 0,1 à 5 % en masse, cette proportion étant exprimée sur la base de la quantité de phosphore.

2. Ceinture de sécurité selon la revendication 1, caractérisée en ce que le co-polyester modifié par du phosphore comprend, au sein de la chaîne polymère, un radical phosphoré bifonctionnel dans une proportion allant de 0,2 à 0,8 % en masse, cette proportion étant exprimée sur la base de la quantité de phosphore.

3. Ceinture de sécurité selon la revendication 1, caractérisée en ce que le tissage de celle-ci est constitué d'au moins deux systèmes de fils qui sont constitués, selon le cas, à au moins 90 % en masse par le co-polyester modifié par du phosphore.

4. Ceinture de sécurité selon la revendication 1, caractérisée en ce que le fil continu de haute résistance possède une contrainte maximale de traction rapportée à la finesse supérieure à 60 cN/dtex, et de façon préférentielle supérieure à 65 cN/dtex, et une dilatation sous contrainte maximale de traction comprise entre 10 et 25 %.

5. Ceinture de sécurité selon la revendication 1, caractérisée en ce que le fil continu de haute résistance présente un rétrécissement en étuve à 200°C inférieur à 20 %.

6. Ceinture de sécurité selon la revendication 1, caractérisée en ce que le tissage contient, en plus des fils continus de haute résistance de co-polyester modifié par du phosphore, des monofilaments caractérisés par une dimension transversale inférieure à 0,5 mm, lesdits monofilaments comprenant un co-polyester modifié par du phosphore comprenant, au sein de la chaîne polymère, un radical phosphoré bifonctionnel dans une proportion allant de 0,1 à 5 % en masse, de préférence dans une proportion allant de 0,2 à 0,8 % en masse, cette proportion étant exprimée sur la base de la quantité de phosphore.

7. Ceinture de sécurité selon la revendication 6, caractérisée en ce que les monofilaments possèdent une contrainte maximale de traction rapportée à la finesse supérieure à 35 cN/dtex, et une dilatation sous contrainte maximale de traction supérieure à 15 %.

8. Ceinture de sécurité selon la revendication 6, caractérisée en ce que le monofilament présente un rétrécissement en étuve à 180 °C inférieur à 20 %.

9. Ceinture de sécurité selon la revendication 1, caractérisée en ce que le fil continu de haute résistance est exempt de produit d'encollage.

10. Ceinture de sécurité selon la revendication 1, caractérisée en ce que le tissage de celle-ci présente une armure croisée, en particulier une armure croisée de type croisée 2/2, ou une armure cannelée.

11. Ceinture de sécurité selon la revendication 1, caractérisée en ce que le tissage de celle-ci possède une masse surfacique inférieure à 100 grammes pour un mètre de tissage d'une largeur de 50 mm, et une épaisseur de tissage inférieure à 1,5 mm.

12. Ceinture de sécurité selon la revendication 1, caractérisée en ce que le tissage de celle-ci présente une contrainte de traction maximale supérieure à 1470 daN pur une largeur de 50 mm et une élongation sous contrainte de traction de 1000N inférieure à 20 % pour une largeur de 50 mm.

13. Ceinture de sécurité selon la revendication 1, caractérisée en ce que le co-polyester modifié par du phosphore contient des unités de répétitions de formule I :
―O-OC―Ar¹―CO―O―R¹― (I),
et
en ce qu'il présente dans la chaîne polymère des unités structurelles de formule II : 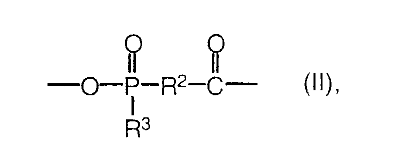 où :
Ar¹ représente un radical aromatique divalent comprenant un ou plusieurs noyaux ;
R¹ est un radical divalent aliphatique ou cycloaliphatique ;
R² représente un radical divalent aliphatique, cycloaliphatique, aromatique ou araliphatique ; et
R³ désigne un radical divalent aliphatique, cycloaliphatique, aromatique ou araliphatique.

14. Ceinture de sécurité selon la revendication 13, caractérisée en ce que Ar¹ représente un radical phényl ou naphtyl, en particulier un 1,4-phényl ou un 2,6-naphtyl.

15. Ceinture de sécurité selon la revendication 13, caractérisée en ce que R¹ représente un radical de formule - CₙH₂ₙ -, où n est un nombre entier compris entre 2 et 6, en particulier un radical éthylène, ou un radical dérivé du cyclohexanediméthanol.

16. Ceinture de sécurité selon la revendication 13, caractérisée en ce que R² représente un radical de formule - CₘH₂ₘ -, où m représente un nombre entier compris entre 2 et 10 ou un radical alcanediyle possédant de 4 à 8, et de préférence 6, atomes de carbone, et en ce que R³ représente un radical alkyl en C₁ - C₆, un radical cyclohexyl, un radical phényl ou un radical benzyl.

17. Utilisation de fils continus de haute résistance constitués d'un co-polyester modifié par du phosphore, caractérisés par un titre de fil inférieur à 2000 dtex, un titre de fibre individuelle inférieur à 25 dtex et une dilatation sous contrainte maximale de traction inférieure à 30 %, pour la fabrication d'une ceinture de sécurité où le co-polyester modifié par du phosphore contient un radical phosphoré bifonctionnel dans une proportion allant de 0,1 à 5 % en masse, cette proportion étant exprimée sur la base de la quantité de phosphore.

18. Utilisation d'une ceinture de sécurité selon la revendication 1 dans des automobiles, des avions ou des canots automobiles.
